# FASCICULE DE BREVET EUROPEEN

(11) **EP 3 913 419 B1**
(45) Date de publication et mention de la délivrance du brevet: **04.06.2025**
(21) Numéro de dépôt: 21174095.6
(22) Date de dépôt: 17.05.2021
(51) Int. Cl.: G02B 27/01, G06F 3/01

(54) **DISPOSITIF ÉLECTRONIQUE DE GESTION D'AFFICHAGE D'UN ÉCRAN D'AFFICHAGE TÊTE HAUTE, SYSTÈME D'AFFICHAGE, PROCÉDÉ DE GESTION ET PRODUIT PROGRAMME ORDINATEUR ASSOCIÉS**
ELEKTRONISCHE VORRICHTUNG ZUR ANZEIGEVERWALTUNG FÜR EINE HEAD-UP-ANZEIGE, ENTSPRECHENDES ANZEIGESYSTEM, VERWALTUNGSVERFAHREN UND COMPUTERPROGRAMMPRODUKT
ELECTRONIC DEVICE FOR MANAGING THE DISPLAY OF A HEAD-UP DISPLAY SCREEN, DISPLAY SYSTEM, MANAGEMENT METHOD AND CORRESPONDING COMPUTER PROGRAM

(30) Priorité: 19.05.2020 FR 2005015
(43) Date de publication de la demande: 24.11.2021
(73) Titulaire: THALES, 92400 Courbevoie (FR)
(72) Inventeur: LEPRON, Nicolas, 33700 MERIGNAC (FR); MAULET, Daniel, 33700 MERIGNAC (FR); BRUEL, Emilie, 33700 MERIGNAC (FR)
(74) Mandataire: Lavoix

(56) Documents cités:
- US-A1- 2020 116 518
- JUNG HOON ET AL: "A Study on Multi-depth Head-Up Display", 10 May 2017 (2017-05-10), XP055772403, Retrieved from the Internet <URL:https://doi.org/10.1002/sdtp.11767> [retrieved on 20210204], DOI: 10.1002/sdtp.11767
- SEO JUNGHOON ET AL: "P-175: A Study of Image Distortion and Brightness-Uniformity Compensation in a Laser Projection System Using a 2-D MEMS Scanner", vol. 41, no. 1, 25 March 2010 (2010-03-25), US, pages 1922, XP055772300, ISSN: 0097-966X, Retrieved from the Internet <URL:https://doi.org/10.1889/1.3500393> [retrieved on 20210204], DOI: 10.1889/1.3500393

## Description

La présente invention concerne un dispositif électronique de gestion d'affichage d'un système d'affichage tête haute propre à être embarqué dans un aéronef.

La présente invention concerne également un procédé de gestion d'affichage d'un système d'affichage tête haute propre à être embarqué dans un aéronef.

La présente invention concerne également un produit programme ordinateur comportant les instructions logicielles qui, lorsque mises en œuvre par un équipement informatique, mettent en œuvre un tel procédé de gestion d'affichage.

L'invention concerne plus particulièrement un hélicoptère, tout en étant applicable à tout type d'aéronef, tel qu'un avion ou un drone.

L'invention concerne en particulier le domaine de l'affichage de symboles, tels que des indicateurs, des compteurs, des cibles, des alertes, etc. sur un système d'affichage, dit tête haute, qui permet ainsi de projeter les symboles devant le pilote de l'aéronef via par exemple un écran d'affichage tête haute.

On connait du document US 2020/116518 un système d'affichage tête haute dans un véhicule automobile.

Il est connu d'afficher ces symboles dans un même plan de visualisation, projeté par exemple à l'infini. Les yeux du pilote accommodent alors afin de focaliser la vision du pilote à l'infini et voir ainsi les symboles de façon nette.

L'affichage des symboles peut être en vue conforme et/ou non-conforme. Il en résulte ainsi des cas de superposition de différents symboles qui rendent difficiles la lecture des informations associées à ces symboles qui se superposent pouvant conduire pour le pilote à des ambiguïtés de lecture, et même dans certains cas à rater une alerte.

Il existe donc un besoin d'obtenir un affichage permettant une lecture des symboles plus aisée pour le pilote, afin de réduire ces ambigüités et de limiter le risque de rater une alerte.

Le but de l'invention est ainsi de proposer un dispositif électronique de gestion d'affichage permettant une meilleure facilité de lecture des symboles affichés et offrant alors une meilleure sécurité pour l'aéronef.

A cet effet, l'invention a pour objet un dispositif électronique de gestion d'affichage d'un système d'affichage tête haute, selon la revendication 1 ou 2.

Ainsi, les symboles sont affichés dans au moins deux plans de visualisation distincts, par stéréoscopie ou par holographie, ce qui permet d'éviter les superpositions de symboles et l'ambigüité qui pourrait en découler. Les modules de détermination et d'alerte permettent de déterminer le plan de visualisation de référence correspondant à un plan d'accommodation des yeux du pilote et d'afficher une alerte dans ce plan de visualisation de référence, afin de s'assurer que le pilote voit bien l'alerte et ne la rate pas.

Le dispositif selon l'invention permet ainsi à la fois de diminuer les ambiguïtés de lecture possibles entre les symboles, grâce aux différents plans de visualisation, tout en assurant au pilote de ne pas rater une alerte qui pourrait survenir en cas d'affichage d'une alerte dans un plan diffèrent de celui vers lequel il accommode.

Ainsi le dispositif selon l'invention permet au pilote une lecture plus aisée des symboles tout en garantissant une meilleure réactivité aux alertes, et donc une meilleure sécurité pour le vol de l'aéronef.

Suivant d'autres aspects avantageux de l'invention, le dispositif électronique de gestion est selon l'une quelconque des revendications 3 à 6.

L'invention a également pour objet un ensemble d'affichage tête haute, selon la revendication 7.

L'invention a également pour objet un procédé de gestion d'affichage d'un système d'affichage tête haute, selon la revendication 8 ou 9.

L'invention a également pour objet un programme d'ordinateur selon la revendication 10.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- la figure 1 est une vue, schématique et de côté, d'un cockpit d'un aéronef ;
- la figure 2 est une représentation schématique en perspective d'un écran d'affichage tête haute ;
- la figure 3 est une représentation schématique d'un dispositif électronique de gestion d'affichage selon l'invention ; et
- la figure 4 est un organigramme d'un procédé, selon l'invention, de gestion d'affichage de l'écran d'affichage tête haute, le procédé étant mis en œuvre par le dispositif électronique de gestion d'affichage de la figure 3.

Dans ce qui suit, le terme « vertical » s'entend de manière générale par rapport à la direction de la force de gravité. Le terme « horizontal » s'entend de manière générale comme perpendiculaire à la direction verticale.

Par la suite, l'invention est décrite en considérant un aéronef 10. Toutefois, l'homme du métier comprendra que l'invention est applicable à tout type de véhicule, tel qu'un aéronef, un véhicule automobile ou un véhicule ferroviaire.

L'aéronef 10 est par exemple un avion, un hélicoptère, ou encore un drone survolant un terrain 12. Autrement dit, l'aéronef 10 est un engin volant pilotable par un pilote 14 via un poste de commande 16, le poste de commande 16 étant disposé à l'intérieur de l'aéronef 10 ou bien à distance de l'aéronef, notamment dans le cas d'un drone.

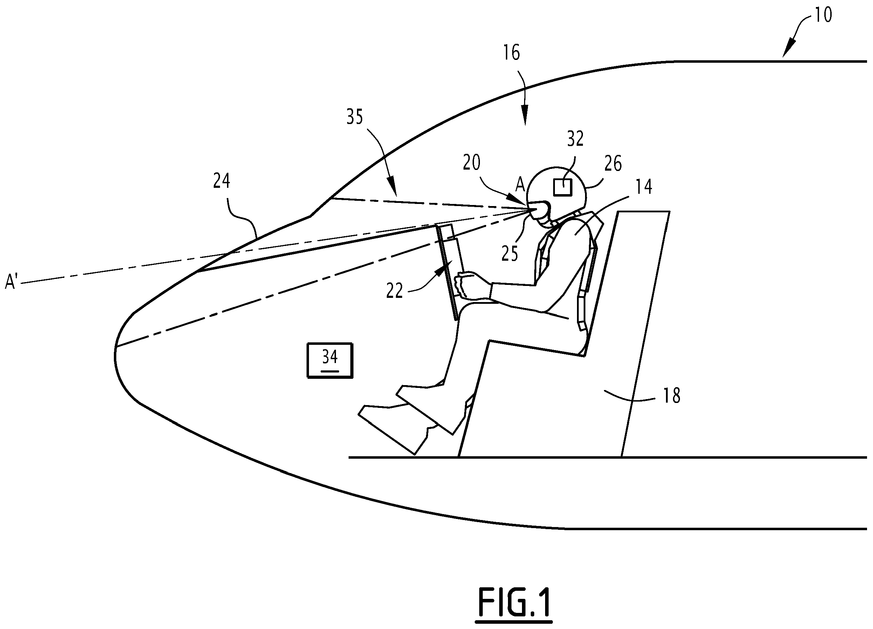

Le poste de commande 16 est ici un cockpit de l'aéronef 10. Comme visible sur la figure 1, le poste de commande 16 comporte au moins un siège 18 pour le pilote 14, au moins un ensemble d'affichage tête haute, avantageusement au moins un écran d'affichage tête basse 22, un pare-brise 24 au moins partiellement transparent et séparant l'intérieur du cockpit de l'environnement extérieur de l'aéronef 10 et un capteur d'orientation 32.

L'ensemble d'affichage tête haute comprend un système d'affichage tête haute et un dispositif électronique 34 de gestion d'affichage du système d'affichage tête haute.

Dans un mode de réalisation, le système d'affichage tête haute est un écran d'affichage tête haute 20.

En variante, le système d'affichage tête haute est un dispositif de représentation holographique tête haute configuré pour représenter au moins une image en trois dimensions en face du pilote 14 en utilisant les interférences de deux faisceaux laser, sans qu'un écran d'affichage ne soit nécessaire.

L'écran d'affichage tête haute 20 est au moins partiellement transparent. Avantageusement, l'écran d'affichage tête haute 20 est une visière 25 intégrée dans un casque 26 propre à être porté par le pilote 14, comme visible sur la figure 1. En variante, l'écran d'affichage tête haute 20 est une surface transparente fixée dans le cockpit et placée devant le pilote 14. En variante encore, l'écran d'affichage tête haute 20 est le pare-brise 24.

L'écran d'affichage tête basse 22 est une surface configurée pour afficher au moins une image. Avantageusement, l'écran d'affichage tête basse 22 est configuré pour afficher des informations relatives à l'aéronef 10, telles que la vitesse, l'altitude, l'orientation de l'aéronef 10 et/ou des informations relatives à l'environnement extérieur de l'aéronef 10, telles que des informations de trafic aérien et des conditions météorologiques aux environs de l'aéronef 10.

Selon un autre mode de réalisation, non représenté, l'aéronef 10 est un drone pilotable à distance via un poste de commande 16, par exemple terrestre, à partir duquel le pilotage du drone est effectué. Le poste de commande 16 comporte ici au moins le siège 18 du pilote 12 et l'écran d'affichage tête haute 20, avantageusement l'au moins un écran d'affichage tête basse 22 et au moins un écran d'affichage d'environnement, non représenté. L'écran d'affichage d'environnement est configuré pour afficher l'environnement extérieur de l'aéronef 10 filmé à partir d'au moins une caméra embarquée par le drone.

Le capteur d'orientation 32 est propre à déterminer un axe de visée A-A' du regard des yeux 33 du pilote 14. Comme visible sur la figure 1, l'axe de visée A-A' associé à un angle solide prédéterminé définit un champ de vue 35.

L'écran d'affichage tête haute 20 est destiné à être disposé au moins partiellement dans le champ de vue 35.

Le capteur d'orientation 32 est par exemple un accéléromètre disposé dans le casque 26 du pilote 14 et propre à déterminer la posture de la tête du pilote 14 à partir des accélérations mesurées du casque 26. Le capteur d'orientation 32 est ainsi propre à déterminer l'axe de visée A-A' à partir de la posture de la tête du pilote 14 et de l'orientation de l'aéronef 10 reçue par l'au moins capteur embarqué 17 dans l'aéronef 10.

En variante, le capteur d'orientation 32 est un capteur électromagnétique propre à déterminer la posture de la tête du pilote 14 à partir de perturbations d'un champ magnétique dues au mouvement de la tête du pilote 14, selon une technique bien connue de l'homme du métier.

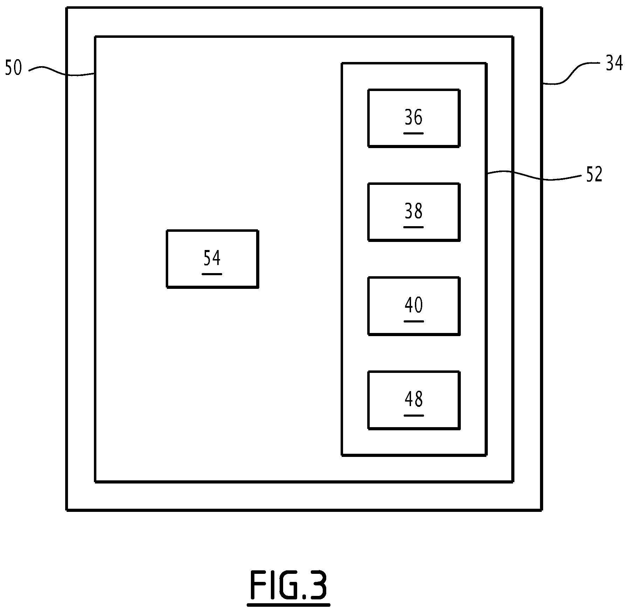

Comme visible sur la figure 3, le dispositif électronique de gestion d'affichage 34 comprend un module d'affichage 36, un module de détermination 38 et un module d'alerte 40.

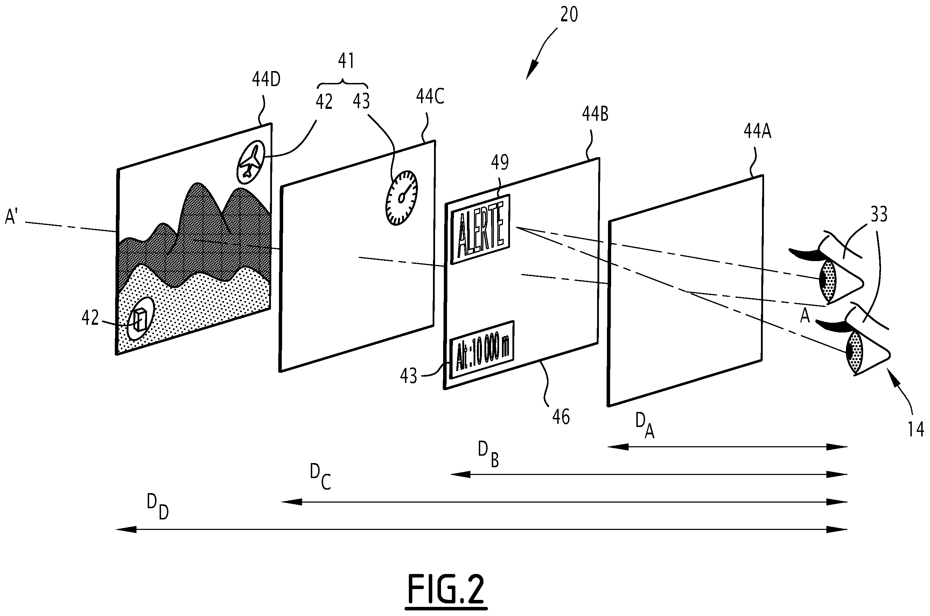

Le module d'affichage 36 est configuré pour afficher une pluralité de symboles 41, visibles sur la figure 2, relatifs au fonctionnement de l'aéronef 10 et à l'environnement de l'aéronef 10 sur l'écran d'affichage tête haute 20.

Les symboles 41 sont par exemple des indicateurs concernant différents systèmes de l'aéronef 10, des compteurs opérationnels de l'aéronef 10, tels qu'un compteur de vitesse ou d'altitude, des bâtiments ou des véhicules d'intérêt dans l'environnement de l'aéronef 10, des alertes etc.

Les symboles 41 comprennent avantageusement des symboles conformes 42 et des symboles non-conformes 43.

On entend par symbole conforme 42 un symbole conforme selon au moins une direction. Lorsque le symbole est conforme selon les trois directions de l'espace, le symbole conforme 42 se superpose parfaitement au terrain effectivement vu par le pilote 14. Le symbole conforme 42 est alors typiquement fixe dans le référentiel géo-terrestre. En variante, le symbole est conforme selon uniquement une ou deux directions de l'espace. Par exemple, un symbole représentant une échelle d'attitude est conforme uniquement selon la direction verticale, c'est-à-dire que ledit symbole reste vertical en cas de mouvement de roulis de la tête du pilote 14, mais se déplace selon les autres directions avec le mouvement d'assiette de la tête du pilote 14.

On entend par symbole non-conforme 43 un symbole fixe dans le champ de vision du pilote 14.

En particulier, le module d'affichage 36 est configuré pour afficher les symboles 41 dans au moins deux plans de visualisation 44A, 44B, 44C, 44D distincts.

Avantageusement, le module d'affichage 36 est configuré pour afficher les symboles 41 dans un nombre de plans de visualisations 44A, 44B, 44C, 44D compris entre 2 et 4.

Lorsque le système d'affichage tête haute est un écran d'affichage tête haute 20, le module d'affichage 36 est configuré pour afficher les symboles 41 par stéréoscopie.

On entend par stéréoscopie, une technique d'affichage permettant de restituer une impression de profondeur DA, DB, DC et DD et de relief au pilote 14 grâce à la juxtaposition de deux images planes légèrement différentes, observées simultanément et séparément par chaque œil 33 du pilote 14.

Comme visible sur la figure 2, chaque plan de visualisation 44A, 44B, 44C, 44D est associé à une profondeur respective DA, DB, DC et DD distincte selon l'axe de visée A-A' à partir du pilote 14.

En particulier, les yeux 33 du pilote 14 accommodent afin de voir nettement dans un plan d'accommodation. On entend par accommodation, la mise au point de la vision du pilote 14 grâce à des modifications de courbure du cristallin selon la profondeur d'un objet, de façon à former une image claire et nette sur la rétine de l'œil 33 correspondant.

Ainsi, lorsque le plan d'accommodation se confond avec l'un des plans de visualisation 44A, 44B, 44C, 44D, le pilote 14 voit de manière nette uniquement les symboles 41 affichés dans ledit plan de visualisation 44A, 44B, 44C, 44D.

Par exemple, dans l'exemple de la figure 2, les yeux 33 du pilote 14 accommodent au niveau du deuxième plan de visualisation 44B.

Les symboles 41 ainsi affichés dans différents plans de visualisation 44A, 44B, 44C, 44D sont donc plus facilement visualisables par le pilote 14 sans ambigüité.

En particulier, lorsque deux symboles 41 sont alignés selon l'axe de visée A-A' du pilote 14, le module d'affichage 36 est configuré pour afficher lesdits symboles 41 dans deux plans de visualisation 44 différents.

Ainsi, les deux symboles 41 ne se superposent pas et sont différentiables facilement par le pilote 14, en modifiant la profondeur du plan d'accommodation de ses yeux 33.

En complément, le module d'affichage 36 est configuré pour afficher les symboles conformes 42 dans un même plan de visualisation 44, avantageusement dans le plan de visualisation 44D le plus profond, notamment situé à une profondeur infinie.

En particulier, les symboles conformes 42 sont associés au terrain 12 survolé par l'aéronef 10. Le terrain étant vu quasiment à l'infini par le pilote 14, les symboles conformes 42 semblent alors situés dans le même plan de visualisation 44D que le terrain 12 pour le pilote 14, facilitant ainsi l'association des symboles conformes 42 avec le terrain 12.

En variante, les symboles conformes 42 sont affichés sur un plan de visualisation 44 représentatif de leur distance réelle par rapport au pilote 14.

Le module d'affichage 36 est en outre configuré pour afficher les symboles 41 associés à une même fonction avionique dans un même plan de visualisation 44C, 44D respectif.

Les fonctions avioniques sont par exemple la gestion de la vitesse de l'aéronef 10, la gestion de l'attitude de l'aéronef 10, la gestion du carburant de l'aéronef 10, la cartographie du terrain 12, la gestion de l'orientation de l'aéronef 10, la gestion de la communication, etc.

Ainsi, le pilote 14 dispose des symboles 41 associés à une même fonction dans un unique plan de visualisation 44C, 44D et peut donc visualiser facilement l'ensemble des informations associés à cette fonction sans avoir à changer de plan de visualisation 44C, 44D respectif.

A titre d'exemple, le compteur de vitesse sol et de vitesse air de l'aéronef 10 sont affichés dans un même plan de visualisation 44C.

Le module de d'affichage 36 est en outre configuré pour afficher chaque symbole 41 avec une intensité lumineuse de valeur croissante en fonction de la profondeur D_{A}, D_{B}, D_{C} et D_{D} entre le pilote 14 et le plan de visualisation 44 associé audit symbole 41.

En effet, plus un symbole 41 est affiché à une profondeur D_{A}, D_{B}, D_{C} et D_{D} importante, moins ce symbole 41 ressort en évidence pour le pilote 14. En affichant les symboles 41 avec une intensité lumineuse de valeur croissante en fonction de la profondeur D_{A}, D_{B}, D_{C} et D_{D}, le module d'affichage 36 compense cet effet, et permet alors au pilote 14 de visualiser tous les symboles 41 avec la même facilité.

Le module de détermination 38 est configuré pour déterminer, parmi les plans de visualisation 44A, 44B, 44C, 44D, un plan de visualisation de référence 46 correspondant au plan d'accommodation des yeux 33 du pilote 14.

En complément facultatif, le dispositif électronique de gestion d'affichage 34 comprend en outre un module 48 de suivi du mouvement des yeux du pilote 14.

Le module de suivi 48 est configuré pour calculer le plan d'accommodation des yeux 33 du pilote 14 à partir de l'orientation respective de chaque œil 33 du pilote 14.

Le module de suivi 48 est notamment relié à une caméra placée dans le casque 26 du pilote 14 et filmant les deux yeux 33 du pilote 14. Le module de suivi 48 est configuré pour recevoir et traiter les images filmées par ladite caméra et déterminer l'orientation respective de chaque œil 33. A partir de ces deux orientations, le module de suivi 48 est propre à calculer le plan d'accommodation des yeux 33, et en particulier la profondeur du plan d'accommodation.

Le module de détermination 38 est avantageusement configuré pour détecter la présence et/ou l'état de marche du module de suivi 48.

Le module de détermination 38 est alors configuré pour déterminer le plan de visualisation de référence 46 à partir du plan d'accommodation calculé par le module de suivi 48.

En particulier, le module de détermination 38 détermine le plan de visualisation de référence 46 en calculant le plan de visualisation 44B le plus proche du plan d'accommodation, notamment un éventuel plan de visualisation 44B confondu avec le plan d'accommodation.

En variante ou en complément, le module de détermination 38 est configuré pour déterminer, en tant que plan de visualisation de référence 46, successivement chacun des plans de visualisation 44A, 44B, 44C, 44D d'un ensemble prédéfini de plans de visualisation 44A, 44B, 44C, 44D.

Le module de détermination 38 détermine l'ensemble prédéfini de plans de visualisation 44A, 44B, 44C, 44D par exemple en sélectionnant uniquement les plans de visualisation 44A, 44B, 44C, 44D correspondant à une phase de vol actuelle de l'aéronef 10. La phase de vol de l'aéronef 10 est, par exemple, une phase de décollage, une phase de croisière, une phase tactique ou une phase d'atterrissage de l'aéronef 10. A titre d'exemple encore, l'ensemble prédéfini comprend le plan de visualisation de référence 46 calculé à partir du plan d'accommodation calculé par le module de suivi 48 et les plans de visualisation 44 directement voisins du plan de visualisation de référence 46.

Le module de détermination 38 détermine ainsi successivement chacun des plans de visualisation 44A, 44B, 44C, 44D de l'ensemble prédéfini comme étant le plan de visualisation de référence 46, de telle sorte qu'au moins l'un de ces plans de visualisation de référence 46 est le plan de visualisation 44B le plus proche du plan de d'accommodation du pilote 14.

Le module d'alerte 40 est configuré pour générer une alerte 49 à afficher par le module d'affichage 36 dans le plan de visualisation de référence 46.

L'alerte 49 est choisie parmi le groupe constitué d'une alerte sur la hauteur au sol de l'aéronef 10, une alerte sur la vitesse de l'aéronef 10, une alerte sur un dysfonctionnement de l'aéronef 10, une alerte sur la présence d'un élément d'intérêt dans l'environnement de l'aéronef 10, une alerte de localisation d'une cible hors champ de vision 35 du pilote 14 et une alerte de localisation de la visée du regard d'un copilote.

L'alerte sur la hauteur correspond par exemple à un passage de l'aéronef 10 sous une hauteur seuil prédéterminée, afin de prévenir le pilote 14 d'un risque pour la sécurité de l'aéronef 10.

L'alerte sur la vitesse correspond par exemple à un dépassement par l'aéronef 10 d'une vitesse seuil prédéterminée au-delà de laquelle le fonctionnement de l'aéronef 10 peut être dégradé.

Un dysfonctionnement de l'aéronef 10 correspond par exemple à une panne ou une erreur d'un système avionique de l'aéronef 10.

L'élément d'intérêt est par exemple un autre aéronef, un obstacle sur le terrain 12 situés à proximité de l'aéronef 10 ou encore un lieu sur lequel l'aéronef est destiné à se poser tel qu'un hôpital, une zone d'accident ou une plateforme offshore.

L'alerte de localisation de la cible hors champ de vision 35 est par exemple une flèche disposée sur le côté du plan de visualisation 44 indiquant la direction dans laquelle se situe ladite cible.

L'alerte de localisation de la visée du regard du copilote est par exemple une représentation graphique de l'axe de visée du copilote.

En complément facultatif, le module d'affichage 36 est ainsi propre à afficher l'alerte 49 dans le plan de visualisation de référence 46 correspondant au plan de visualisation 44B le plus proche du plan d'accommodation du pilote 14.

L'alerte 49 s'affiche donc à proximité du plan d'accommodation du pilote 14, ce qui permet au pilote 14 de voir instantanément cette alerte 49 et de réagir en fonction, avec une faible probabilité qu'il ne voit pas l'alerte 49.

En variante, le module d'affichage 36 est ainsi propre à afficher l'alerte successivement dans les différents plans de visualisation de référence 46 parmi l'ensemble prédéfini de plans de visualisation 44.

En particulier, le module d'affichage 36 est propre à afficher l'alerte 49, par exemple à une fréquence comprise entre 2 Hz et 3 Hz, sur chaque plan de visualisation de référence 46 successifs.

En complément, le module d'affichage 36 est configuré pour afficher l'alerte 49 avec une taille décroissante en fonction de la profondeur D_{A}, D_{B}, D_{C} et D_{D} entre le pilote 14 et le plan de visualisation 44 dans lequel l'alerte 49 est affichée.

Ainsi, plus l'alerte 49 est affichée à une profondeur importante, plus la taille d'affichage de l'alerte 49 diminue.

En complément ou en variante, le module d'affichage 36 est propre à afficher l'alerte 49 successivement à des profondeurs prédéterminées, ces profondeurs correspondant ou non à des profondeurs D_{A}, D_{B}, D_{C} et D_{D} d'un plan de visualisation 44.

Par exemple, le module d'affichage 36 est propre à afficher l'alerte 49 successivement et itérativement à une profondeur de 5m, puis une profondeur de 4,5m, puis une profondeur de 4m, puis une profondeur de 3,5m, etc.

Ce balayage des plans permet de s'assurer que l'alerte 49 s'affiche à proximité du plan de d'accommodation du pilote 14. En outre, ce balayage permet d'obtenir une impression de clignotement de l'alerte 49 dans le plan d'accommodation du pilote 14, ce qui permet d'attirer encore davantage l'attention du pilote 14 sur cette alerte 49.

L'adaptation de la taille d'affichage de l'alerte 49 avec la profondeur d'affichage de cette alerte 49 permet également d'attirer encore davantage l'attention du pilote 14 sur cette alerte 49.

Dans l'exemple de la figure 3, le dispositif électronique de gestion d'affichage 34 comprend une unité de traitement d'informations 50 formée par exemple d'une mémoire 52 et d'un processeur 54 associé à la mémoire 52. Le module d'affichage 36, le module de détermination 38, le module d'alerte 40, et en complément facultatif le module de suivi 48 sont réalisés chacun sous forme d'un logiciel, ou d'une brique logicielle, exécutables par le processeur 54. La mémoire 52 du dispositif électronique de gestion d'affichage 34 est alors apte à stocker un logiciel d'affichage tête haute, un logiciel de détermination du plan de visualisation de référence 46, un logiciel de génération de l'alerte et un logiciel de calcul du plan d'accommodation des yeux 33 du pilote 14. Le processeur 54 est alors apte à exécuter chacun de ces logiciels.

En variante non représentée, le module d'affichage 36, le module de détermination 38, le module d'alerte 40 et, en complément facultatif le module de suivi 48, sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit*)*.*

Lorsque le dispositif électronique de gestion d'affichage 34 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique. Sur le support lisible est alors mémorisé un programme d'ordinateur comportant des instructions logicielles.

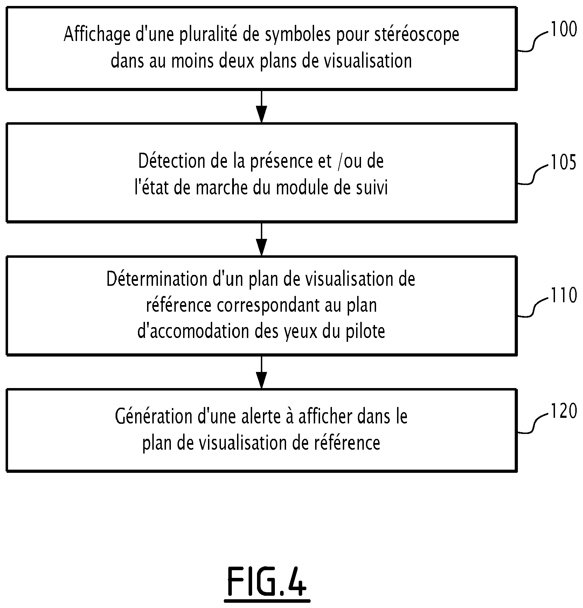

Le fonctionnement du dispositif électronique de gestion d'affichage 34 selon l'invention va désormais être expliqué à l'aide de la figure 4 représentant un organigramme du procédé, selon l'invention, de gestion de l'affichage de l'écran d'affichage tête haute 20, le procédé étant mis en œuvre par le dispositif électronique de gestion d'affichage 34.

Initialement, l'aéronef 10 survole le terrain 12.

Le procédé comprend alors une première étape 100 d'affichage par le module d'affichage 36 d'une pluralité de symboles 41 dans au moins deux plans de visualisation 44 distincts.

Optionnellement, chaque symbole 41 est affiché avec une intensité lumineuse de valeur croissante en fonction de la profondeur D_{A}, D_{B}, D_{C} et D_{D} entre le pilote 14 et le plan de visualisation 44A, 44B, 44C, 44D associé audit symbole 41.

Avantageusement, les symboles conformes 42 sont affichés dans un même plan de visualisation 44, avantageusement dans le plan de visualisation 44D le plus profond.

En outre, les symboles 41 associés à une même fonction avionique sont affichés dans un même plan de visualisation 44A, 44B, 44C, 44D.

Dans un mode de réalisation de l'invention, le procédé comprend une étape intermédiaire 105 de détection, par le module de détermination 38, de la présence et/ou de l'état de marche du module de suivi 48.

Puis, le procédé comprend une étape 110 de détermination du plan de visualisation de référence 46 correspondant au plan d'accommodation des yeux du pilote 14.

Le procédé comprend alors une sous étape de calcul, par le module de suivi 48, du plan d'accommodation des yeux du pilote 14 à partir au moins de l'orientation respective de chaque œil du pilote 14.

Le plan de visualisation de référence 46 est alors déterminé par le module de détermination 38 à partir du plan d'accommodation ainsi calculé. En particulier, le plan de visualisation de référence 46 est déterminé en calculant le plan de visualisation 44B le plus proche du plan d'accommodation.

En variante ou en complément, le plan de visualisation de référence 46 est déterminé par le module de détermination 38 comme étant successivement chacun des plans de visualisation 44A, 44B, 44C, 44D d'un ensemble prédéfini de plans de visualisation 44A, 44B, 44C, 44D.

Le procédé comprend alors une étape 120 de génération par le module d'alerte 40 d'une alerte 49 à afficher dans le plan de visualisation de référence 46.

En complément facultatif, l'alerte 49 est affichée par le module d'affichage 36 dans le plan de visualisation de référence 46 correspondant au plan de visualisation 44B le plus proche du plan d'accommodation des yeux 33 du pilote 14.

L'alerte 49 s'affiche donc à proximité du plan d'accommodation des yeux 33 du pilote 14, ce qui permet au pilote 14 de voir instantanément cette alerte et de réagir de manière appropriée, sans risque qu'il ne voit pas l'alerte.

En variante, l'alerte 49 est affichée par le module d'affichage 36 successivement dans les différents plans de visualisation de référence 46.

Ce balayage des plans de visualisation de référence 46 permet de s'assurer que l'alerte 49 s'affiche à proximité du plan de d'accommodation des yeux 33 du pilote 14 et donne une impression de clignotement de l'alerte 49 dans le plan d'accommodation des yeux 33 du pilote 14, ce qui permet d'attirer encore davantage l'attention du pilote 14 sur cette alerte 49.

On conçoit alors que la présente invention présente un certain nombre d'avantages.

En effet, le dispositif de gestion d'affichage 34 selon l'invention permet ainsi de diminuer les ambiguïtés de lecture possibles entre les symboles 41 grâce aux différents plans de visualisation 44A, 44B, 44C, 44D.

En outre, le regroupement fonctionnel des symboles 41 avec un plan de visualisation respectif pour chaque fonction, telle qu'une fonction avionique, l'affichage des symboles conformes 42 à l'infini et l'affichage avec une intensité lumineuse croissante en fonction de la profondeur permettent de diminuer encore davantage les ambigüités de lecture des symboles 41.

L'invention permet en outre au pilote 14 de limiter le risque d'un défaut de perception d'une alerte 49 qui pourrait survenir en cas d'affichage de cette alerte 49 dans un plan diffèrent du plan d'accommodation de ses yeux 33.

En effet, le dispositif de gestion d'affichage 34 permet que l'alerte 49 s'affiche à proximité du plan d'accommodation des yeux 33 du pilote 14 afin que ce dernier visualise l'alerte 49 plus rapidement.

Ainsi, l'invention permet au pilote 14 une lecture plus aisée des symboles 41, tout en garantissant une meilleure réactivité aux alertes 49, et donc une meilleure sécurité pour le vol de l'aéronef 10 de par un pilotage plus sûr.

## Revendications

1. Dispositif électronique (34) de gestion d'affichage d'un système d'affichage tête haute (20) propre à être embarqué dans un poste de commande (16) d'un aéronef (10) pilotable par au moins un pilote (14), le dispositif électronique de gestion d'affichage (34) comprenant :
- un module d'affichage (36) configuré pour afficher une pluralité de symboles (41) relatifs au fonctionnement de l'aéronef (10) et à l'environnement de l'aéronef (10) via le système d'affichage tête haute (20), dans au moins deux plans de visualisation (44A, 44B, 44C, 44D) distincts, les plans de visualisation (44A, 44B, 44C, 44D) étant chacun de profondeur (D_{A}, D_{B}, D_{C}, D_{D}) distincte selon un axe de visée (A-A') à partir du pilote (14),
**caractérisé en ce qu'**il comprend en outre :
- un module de détermination (38) configuré pour déterminer un plan de visualisation de référence (46) correspondant à un plan d'accommodation des yeux (33) du pilote (14),
- un module (48) de suivi du mouvement des yeux du pilote, le module de suivi (48) étant configuré pour calculer le plan d'accommodation des yeux (33) du pilote (14) à partir de l'orientation respective de chaque œil (33) du pilote (14), et le module de détermination (38) étant configuré pour déterminer le plan de visualisation de référence (46) à partir du plan d'accommodation calculé, et
- un module d'alerte (40) configuré pour générer au moins une alerte (49) à afficher par le module d'affichage (36) dans le plan de visualisation de référence (46).

2. Dispositif électronique (34) de gestion d'affichage d'un système d'affichage tête haute (20) propre à être embarqué dans un poste de commande (16) d'un aéronef (10) pilotable par au moins un pilote (14), le dispositif électronique de gestion d'affichage (34) comprenant :
- un module d'affichage (36) configuré pour afficher une pluralité de symboles (41) relatifs au fonctionnement de l'aéronef (10) et à l'environnement de l'aéronef (10) via le système d'affichage tête haute (20), dans au moins deux plans de visualisation (44A, 44B, 44C, 44D) distincts, les plans de visualisation (44A, 44B, 44C, 44D) étant chacun de profondeur (D_{A}, D_{B}, D_{C}, D_{D}) distincte selon un axe de visée (A-A') à partir du pilote (14),
**caractérisé en ce qu'**il comprend en outre :
- un module de détermination (38) configuré pour déterminer un plan de visualisation de référence (46) correspondant à un plan d'accommodation des yeux (33) du pilote (14),
le module de détermination (38) étant configuré pour déterminer, en tant que plan de visualisation de référence (46), successivement chacun des plans de visualisation (44A, 44B, 44C, 44D) d'un ensemble prédéfini de plans de visualisation (44A, 44B, 44C, 44D), et
- un module d'alerte (40) configuré pour générer au moins une alerte (49) à afficher par le module d'affichage (36) dans le plan de visualisation de référence (46).

3. Dispositif électronique (34) selon l'une quelconque des revendications précédentes, dans lequel, lorsque deux symboles (41) sont alignés selon l'axe de visée (A-A'), le module d'affichage (36) est configuré pour afficher lesdits symboles (41) dans deux plans de visualisation (44A, 44B, 44C, 44D) différents.

4. Dispositif électronique (34) selon l'une quelconque des revendications précédentes, dans lequel les symboles (41) comprennent des symboles conformes (42) et des symboles non-conformes (43), le module d'affichage (36) étant configuré pour afficher les symboles conformes (42) dans un même plan de visualisation (44A, 44B, 44C, 44D),
avantageusement dans le plan de visualisation (44D) le plus profond.

5. Dispositif électronique (34) selon l'une quelconque des revendications précédentes, dans lequel le module d'affichage (36) est configuré pour afficher chaque symbole (41) avec une intensité lumineuse de valeur croissante en fonction de la profondeur (D_{A}, D_{B}, D_{C}, D_{D}) entre le pilote (14) et le plan de visualisation (44A, 44B, 44C, 44D) associé audit symbole (41).

6. Dispositif électronique (34) selon l'une quelconque des revendications précédentes, dans lequel l'alerte (49) est choisie parmi le groupe constitué de : une alerte sur la hauteur au sol de l'aéronef (10) ; une alerte sur la vitesse de l'aéronef (10) ; une alerte sur un dysfonctionnement de l'aéronef (10) ; une alerte sur la présence d'un élément d'intérêt dans l'environnement de l'aéronef (10) ; une alerte de localisation d'une cible hors champ de vision (35) du pilote (10) ; et une alerte de localisation de la visée du regard d'un copilote.

7. Ensemble d'affichage tête haute comprenant :
- un système d'affichage tête haute (20) propre à être disposé dans un poste de commande (16) d'un aéronef (10), et
- un dispositif électronique de gestion d'affichage (34) selon l'une quelconque des revendications précédentes.

8. Procédé de gestion d'affichage d'un système d'affichage tête haute (20) propre à être embarqué dans un poste de commande (16) d'un aéronef (10) pilotable par au moins un pilote (14), le procédé de gestion d'affichage étant mis en œuvre par un dispositif électronique de gestion d'affichage (34) et comprenant au moins les étapes suivantes :
- affichage (100) d'une pluralité de symboles (41) relatifs au fonctionnement de l'aéronef (10) et à l'environnement de l'aéronef (10) via le système d'affichage tête haute (20), dans au moins deux plans de visualisation (44A, 44B, 44C, 44D) distincts, les plans de visualisation (44A, 44B, 44C, 44D) étant chacun de profondeur (D_{A}, D_{B}, D_{C}, D_{D}) distincte selon un axe de visée (A-A') à partir du pilote (14),
**caractérisé en ce qu'**il comprend en outre les étapes suivantes :
- détermination (110) d'un plan de visualisation de référence (46) correspondant à un plan d'accommodation (44A, 44B, 44C, 44D) des yeux (33) du pilote (14), le plan d'accommodation des yeux (33) du pilote (14) étant calculé à partir de l'orientation respective de chaque œil (33) du pilote (14) et par un module (48) de suivi du mouvement des yeux du pilote (14), le plan de visualisation de référence (46) étant alors déterminé à partir du plan d'accommodation calculé, et
- génération (120) d'au moins une alerte (49) à afficher par le module d'affichage (36) dans le plan de visualisation de référence (46).

9. Procédé de gestion d'affichage d'un système d'affichage tête haute (20) propre à être embarqué dans un poste de commande (16) d'un aéronef (10) pilotable par au moins un pilote (14), le procédé de gestion d'affichage étant mis en œuvre par un dispositif électronique de gestion d'affichage (34) et comprenant au moins les étapes suivantes :
- affichage (100) d'une pluralité de symboles (41) relatifs au fonctionnement de l'aéronef (10) et à l'environnement de l'aéronef (10) via le système d'affichage tête haute (20), dans au moins deux plans de visualisation (44A, 44B, 44C, 44D) distincts, les plans de visualisation (44A, 44B, 44C, 44D) étant chacun de profondeur (D_{A}, D_{B}, D_{C}, D_{D}) distincte selon un axe de visée (A-A') à partir du pilote (14),
**caractérisé en ce qu'**il comprend en outre les étapes suivantes :
- détermination (110) d'un plan de visualisation de référence (46) correspondant à un plan d'accommodation (44A, 44B, 44C, 44D) des yeux (33) du pilote (14) ; avec détermination, en tant que plan de visualisation de référence (46), successivement chacun des plans de visualisation (44A, 44B, 44C, 44D) d'un ensemble prédéfini de plans de visualisation (44A, 44B, 44C, 44D), et
- génération (120) d'au moins une alerte (49) à afficher par le module d'affichage (36) dans le plan de visualisation de référence (46).

10. Produit programme ordinateur comportant les instructions logicielles qui, lorsque mises en œuvre par un équipement informatique, associé à un système d'affichage tête haute (20) propre à être embarqué dans un poste de commande (16) d'un aéronef (10) pilotable par au moins un pilote (14), mettent en œuvre le procédé de gestion d'affichage selon la revendication 8 ou 9.

## Patentansprüche

1. Elektronische Vorrichtung (34) zur Anzeigeverwaltung eines Head-up-Anzeigesystems (20), das geeignet ist, um in einem Steuerstand (16) an Bord eines Luftfahrzeugs (10) zu sein, das von mindestens einem Piloten (14) steuerbar ist, die elektronische Vorrichtung zur Anzeigeverwaltung (34) umfassend:
- ein Anzeigemodul (36), das konfiguriert ist, um eine Vielzahl von Symbolen (41), die sich auf den Betrieb des Flugzeugs (10) und die Umgebung des Flugzeugs (10) beziehen, über das Head-up-Anzeigesystem (20) in mindestens zwei separaten Visualisierungsebenen (44A, 44B, 44C, 44D) anzuzeigen, wobei die Visualisierungsebenen (44A, 44B, 44C, 44D) jeweils von anderer Tiefe (D_{A}, D_{B}, D_{C}, D_{D}) entlang einer Sichtachse (A-A') ausgehend von dem Piloten (14) sind,
**dadurch gekennzeichnet, dass** es ferner Folgendes umfasst:
- ein Bestimmungsmodul (38), das konfiguriert ist, um eine Referenzvisualisierungsebene (46) zu bestimmen, die einer Akkommodationsebene der Augen (33) des Piloten (14) entspricht,
- ein Modul (48) zum Verfolgen der Bewegung der Augen des Piloten, wobei das Verfolgungsmodul (48) konfiguriert ist, um die Akkommodationsebene der Augen (33) des Piloten (14) anhand der jeweiligen Ausrichtung jedes Auges (33) des Piloten (14) zu berechnen, und wobei das Bestimmungsmodul (38) konfiguriert ist, um die Referenzvisualisierungsebene (46) anhand der berechneten Akkommodationsebene zu bestimmen, und
- ein Alarmmodul (40), das konfiguriert ist, um mindestens eine Warnung (49) zu erzeugen, die von dem Anzeigemodul (36) in der Referenzvisualisierungsebene (46) angezeigt werden soll.

2. Elektronische Vorrichtung (34) zur Anzeigeverwaltung eines Head-up-Anzeigesystems (20), das geeignet ist, um in einem Steuerstand (16) an Bord eines Luftfahrzeugs (10) zu sein, das von mindestens einem Piloten (14) steuerbar ist, die elektronische Vorrichtung zur Anzeigeverwaltung (34) umfassend:
- ein Anzeigemodul (36), das konfiguriert ist, um eine Vielzahl von Symbolen (41), die sich auf den Betrieb des Flugzeugs (10) und die Umgebung des Flugzeugs (10) beziehen, über das Head-up-Anzeigesystem (20) in mindestens zwei separaten Visualisierungsebenen (44A, 44B, 44C, 44D) anzuzeigen, wobei die Visualisierungsebenen (44A, 44B, 44C, 44D) jeweils von anderer Tiefe (D_{A}, D_{B}, D_{C}, D_{D}) entlang einer Sichtachse (A-A') ausgehend von dem Piloten (14) sind,
**dadurch gekennzeichnet, dass** es ferner Folgendes umfasst:
- ein Bestimmungsmodul (38), das konfiguriert ist, um eine Referenzvisualisierungsebene (46) zu bestimmen, die einer Akkommodationsebene der Augen (33) des Piloten (14) entspricht,
wobei das Bestimmungsmodul (38) konfiguriert ist, um als Referenzvisualisierungsebene (46) nacheinander jede der Visualisierungsebenen (44A, 44B, 44C, 44D) aus einem vordefinierten Satz von Visualisierungsebenen (44A, 44B, 44C, 44D) zu bestimmen, und
- ein Alarmmodul (40), das konfiguriert ist, um mindestens eine Warnung (49) zu erzeugen, die von dem Anzeigemodul (36) in der Referenzvisualisierungsebene (46) angezeigt werden soll.

3. Elektronische Vorrichtung (34) nach einem der vorherigen Ansprüche, wobei, wenn zwei Symbole (41) entlang der Zielachse (A-A') ausgerichtet sind, das Anzeigemodul (36) konfiguriert ist, um die Symbole (41) in zwei verschiedenen Visualisierungsebenen (44A, 44B, 44C, 44D) anzuzeigen.

4. Elektronische Vorrichtung (34) nach einem der vorherigen Ansprüche, wobei die Symbole (41) konforme Symbole (42) und nicht konforme Symbole (43) umfassen, wobei das Anzeigemodul (36) konfiguriert ist, um die konformen Symbole (42) in einer gleichen Visualisierungsebene (44A, 44B, 44C, 44D) anzuzeigen,
vorteilhafterweise in der tiefsten Visualisierungsebene (44D).

5. Elektronische Vorrichtung (34) nach einem der vorherigen Ansprüche, wobei das Anzeigemodul (36) konfiguriert ist, um jedes Symbol (41) mit einer Lichtintensität anzuzeigen, deren Wert abhängig von der Tiefe (D_{A}, D_{B}, D_{C}, D_{D}) zwischen dem Piloten (14) und der Visualisierungsebene (44A, 44B, 44C, 44D) ansteigt, die mit dem Symbol (41) assoziiert ist.

6. Elektronische Vorrichtung (34) nach einem der vorherigen Ansprüche, wobei die Warnung (49) ausgewählt ist aus der Gruppe, bestehend aus: einer Warnung über die Bodenhöhe des Flugzeugs (10); einer Warnung über die Geschwindigkeit des Flugzeugs (10); einer Warnung über eine Funktionsstörung des Flugzeugs (10); einer Warnung über das Vorhandensein eines Elements von Interesse in der Umgebung des Flugzeugs (10); einer Warnung über die Lokalisierung eines Ziels außerhalb des Sichtfelds (35) des Piloten (10); und einer Warnung über die Lokalisierung der Blickrichtung eines Kopiloten.

7. Head-up-Anzeigeanordnung, umfassend:
- ein Head-up-Anzeigesystem (20), das geeignet ist, um in einem Steuerstand (16) eines Flugzeugs (10) angeordnet zu sein, und
- eine elektronische Vorrichtung zur Anzeigeverwaltung (34) nach einem der vorherigen Ansprüche.

8. Verfahren zur Anzeigeverwaltung eines Head-up-Anzeigesystems (20), das geeignet ist, um in einem Steuerstand (16) an Bord eines Luftfahrzeugs (10) zu sein, das von mindestens einem Piloten (14) steuerbar ist, wobei das Verfahren zur Anzeigeverwaltung von einer elektronischen Vorrichtung zur Anzeigeverwaltung (34) durchgeführt wird und mindestens die folgenden Schritte umfasst:
- Anzeigen (100) einer Vielzahl von Symbolen (41), die sich auf den Betrieb des Flugzeugs (10) und die Umgebung des Flugzeugs (10) beziehen, über das Head-up-Anzeigesystem (20) in mindestens zwei separaten Visualisierungsebenen (44A, 44B, 44C, 44D) anzuzeigen, wobei die Visualisierungsebenen (44A, 44B, 44C, 44D) jeweils von anderer Tiefe (D_{A}, D_{B}, D_{C}, D_{D}) entlang einer Sichtachse (A-A') ausgehend von dem Piloten (14) sind, **dadurch gekennzeichnet, dass** es ferner die folgenden Schritte umfasst:
- Bestimmen (110) einer Referenzvisualisierungsebene (46), die einer Akkommodationsebene (44A, 44B, 44C, 44D) der Augen (33) des Piloten (14) entspricht, wobei die Akkommodationsebene der Augen (33) des Piloten (14) aus der jeweiligen Ausrichtung von jedem Auge (33) des Piloten (14) und durch ein Modul (48) zur Verfolgung der Bewegung der Augen des Piloten (14) berechnet wird, wobei die Referenzvisualisierungsebene (46) dann anhand der berechneten Akkommodationsebene bestimmt wird, und
- Erzeugen (120) mindestens einer Warnung (49), die von dem Anzeigemodul (36) in der Referenzvisualisierungsebene (46) angezeigt werden soll.

9. Verfahren zur Anzeigeverwaltung eines Head-up-Anzeigesystems (20), das geeignet ist, um in einem Steuerstand (16) an Bord eines Luftfahrzeugs (10) zu sein, das von mindestens einem Piloten (14) steuerbar ist, wobei das Verfahren zur Anzeigeverwaltung von einer elektronischen Vorrichtung zur Anzeigeverwaltung (34) durchgeführt wird und mindestens die folgenden Schritte umfasst:
- Anzeigen (100) einer Vielzahl von Symbolen (41), die sich auf den Betrieb des Flugzeugs (10) und die Umgebung des Flugzeugs (10) beziehen, über das Head-up-Anzeigesystem (20) in mindestens zwei separaten Visualisierungsebenen (44A, 44B, 44C, 44D) anzuzeigen, wobei die Visualisierungsebenen (44A, 44B, 44C, 44D) jeweils von anderer Tiefe (D_{A}, D_{B}, D_{C}, D_{D}) entlang einer Sichtachse (A-A') ausgehend von dem Piloten (14) sind, **dadurch gekennzeichnet, dass** es ferner die folgenden Schritte umfasst:
- Bestimmen (110) einer Referenzvisualisierungsebene (46), die einer Akkommodationsebene (44A, 44B, 44C, 44D) der Augen (33) des Piloten (14) entspricht; wobei als die Referenzvisualisierungsebene (46) nacheinander jede der Visualisierungsebenen (44A, 44B, 44C, 44D) anhand eines vordefinierten Satzes von Visualisierungsebenen (44A, 44B, 44C, 44D) bestimmt wird; und
- Erzeugen (120) mindestens einer Warnung (49), die von dem Anzeigemodul (36) in der Referenzvisualisierungsebene (46) angezeigt werden soll.

10. Computerprogrammprodukt, umfassend Softwareanweisungen, die, wenn sie von einer Computerausrüstung durchgeführt werden, die mit einem Head-up-Anzeigesystem (20) assoziiert ist, das geeignet ist, in einem Steuerstand (16) an Bord eines Flugzeugs (10) zu sein, das von mindestens einem Piloten (14) steuerbar ist, das Verfahren zur Anzeigeverwaltung nach Anspruch 8 oder 9 durchführen.

## Claims

1. An electronic display management device (34) for a head-up display system (20) suitable for being embarked in a cockpit (16) of an aircraft (10) that can be piloted by at least one pilot (14), the electronic display management device (34) comprising :
- a display module (36) configured to display a plurality of symbols (41) relative to the operation of the aircraft (10) and to the environment of the aircraft (10) via the head-up display system (20), in at least two distinct visualization planes (44A, 44B, 44C, 44D), the visualization planes (44A, 44B, 44C, 44D) each having a distinct depth (D_{A}, D_{B}, D_{C}, D_{D}) along a line of sight (A-A') from the pilot (14),
**characterized in that** it further comprises :
- a determination module (38) configured to determine a reference visualization plane (46) corresponding to an accommodation plane of the eye (33) of the pilot (14),
- a module (48) for tracking the movement of the eyes of the pilot, the tracking module (48) being configured to calculate the accommodation plane of the eyes (33) of the pilot (14) from the respective orientation of each eye (33) of the pilot (14), and the determination module (38) being configured to determine the reference visualization plane (46) from the calculated accommodation plane, and
- a warning module (40) configured to generate at least one warning (49) to be displayed by the display module (36) in the reference visualization plane (46).

2. An electronic display management device (34) for a head-up display system (20) suitable for being embarked in a cockpit (16) of an aircraft (10) that can be piloted by at least one pilot (14), the electronic display management device (34) comprising :
- a display module (36) configured to display a plurality of symbols (41) relative to the operation of the aircraft (10) and to the environment of the aircraft (10) via the head-up display system (20), in at least two distinct visualization planes (44A, 44B, 44C, 44D), the visualization planes (44A, 44B, 44C, 44D) each having a distinct depth (D_{A}, D_{B}, D_{C}, D_{D}) along a line of sight (A-A') from the pilot (14),
**characterized in that** it further comprises :
- a determination module (38) configured to determine a reference visualization plane (46) corresponding to an accommodation plane of the eye (33) of the pilot (14),
the determination module (38) being configured to determine, as a reference visualization plane (46), successively each of the visualization planes (44A, 44B, 44C, 44D) of a predefined set of visualization planes (44A, 44B, 44C, 44D), and
- a warning module (40) configured to generate at least one warning (49) to be displayed by the display module (36) in the reference visualization plane (46).

3. The electronic device (34) according to any of the preceding claims, wherein, when two symbols (41) are aligned along the line of sight (A-A'), the display module (36) is configured to display said symbols (41) in two different visualization planes (44A, 44B, 44C, 44D).

4. The electronic device (34) according to any of the preceding claims, wherein the symbols (41) comprise conforming symbols (42) and non-conforming symbols (43), the display module (36) being configured to display the conforming symbols (42) in a single visualization plane (44A, 44B, 44C, 44D),
advantageously in the deepest visualization plane (44D).

5. The electronic device (34) according to any of the preceding claims, wherein the display module (36) is configured to display each symbol (41) with a depth-dependent increasing light intensity (D_{A}, D_{B}, D_{C}, D_{D}) between the pilot (14) and the visualization plane (44A, 44B, 44C, 44D) related to said symbol (41).

6. The electronic device (34) according to any of the preceding claims, wherein the warning (49) is selected from the group consisting of : a warning on the height of the aircraft (10) above the ground; a warning on the speed of the aircraft (10); a warning on a malfunction of the aircraft (10); a warning on the presence of an element of interest in the environment of the aircraft (10); a warning on the localization of a target out of the field of view (35) of the pilot (10); and a warning on the localization of the sighting of a co-pilot.

7. A head-up display assembly comprising:
- a head-up display system (20) adapted to be placed in a cockpit (16) of an aircraft (10), and
- an electronic display management device (34) according to any of the preceding claims.

8. A display management method for a head-up display system (20) able to be embarked in a cockpit (16) of an aircraft (10) piloted by at least one pilot (14), the display management method being implemented by an electronic display management device (34) and comprising at least the following steps:
- display (100) of a plurality of symbols (41) relative to the operation of the aircraft (10) and to the environment of the aircraft (10) via the head-up display system (20), in at least two distinct visualization planes (44A, 44B, 44C, 44D), the visualization planes (44A, 44B, 44C, 44D) each having a distinct depth D_{A}, D_{B}, D_{C}, and D_{D} along a line of sight (A-A') from the pilot (14),
**characterized in that** it further comprises the following steps:
- determination (110) of a reference visualization plane (46) corresponding to an accommodation plane (44A, 44B, 44C, 44D) of the eyes (33) of the pilot (14), the accommodation plane of the eyes (33) of the pilot (14) being calculated from the respective orientation of each eye (33) of the pilot (14) and by a module (48) for tracking the movement of the eyes of the pilot (14), the reference visualization plane (46) being then determined from the calculated accommodation plane, and
- generation (120) of at least one warning (49) to be displayed by the display module (36) in the reference visualization plane (46).

9. A display management method for a head-up display system (20) able to be embarked in a cockpit (16) of an aircraft (10) piloted by at least one pilot (14), the display management method being implemented by an electronic display management device (34) and comprising at least the following steps:
- display (100) of a plurality of symbols (41) relative to the operation of the aircraft (10) and to the environment of the aircraft (10) via the head-up display system (20), in at least two distinct visualization planes (44A, 44B, 44C, 44D), the visualization planes (44A, 44B, 44C, 44D) each having a distinct depth D_{A}, D_{B}, D_{C}, and D_{D} along a line of sight (A-A') from the pilot (14),
**characterized in that** it further comprises the following steps:
- determination (110) of a reference visualization plane (46) corresponding to an accommodation plane (44A, 44B, 44C, 44D) of the eyes (33) of the pilot (14); with determination, as a reference visualization plane (46), successively each of the visualization planes (44A, 44B, 44C, 44D) of a predefined set of visualization planes (44A, 44B, 44C, 44D), and
- generation (120) of at least one warning (49) to be displayed by the display module (36) in the reference visualization plane (46).

10. A computer program product comprising software instructions which, when implemented by the computer equipment, associated to a head-up display system (20) suitable for being embarked in a cockpit (16) of an aircraft (10) that can be piloted by at least one pilot (14), implement the display management method according to claim 8 or 9.
